# EUROPEAN PATENT APPLICATION

(11) **EP 1 818 449 A1**
(43) Date of publication of application: **15.08.2007**
(21) Application number: 06101488.2
(22) Date of filing: 09.02.2006
(51) Int. Cl.: D21H 21/56, D21H 23/50

(54) **Method for coating a substrate and printing sheet obtained using such method**

(71) Applicant: Sappi Services Netherlands b.v., 6211 AA Maastricht (NL)
(72) Inventor: Botty, Gilbert, 6226 DG Maastricht (NL); Oberndorfer, Johann, 82194 Gröbenzell (DE); Eckl, Josef, 86163 Augsburg (DE)
(74) Representative: Bremi, Tobias Hans

(57) **Abstract**

Disclosed is a method for making a printing sheet (1) comprising at least one step of providing a formulation (5) comprising an aqueous solution, mixture or suspension (7) of at least a binder and carbon dioxide under conditions that the carbon dioxide is in supercritical or liquid state and coating a paper substrate (2) with said formulation (7) under release of pressure such that the carbon dioxide expands and subsequent removal of water and possibly present additional solvent under formation of a porous solid layer (3). Disclosed are further printing sheets obtainable by such a method.

## Description

### TECHNICAL FIELD

The present invention relates to the field of coating of paper substrates and to a printing sheet obtained after coating a paper substrate.

### BACKGROUND OF THE INVENTION

Paper, as it is commonly known today, is composed of matted cellulose fibres, such as those obtained from (soft or hard) wood, cotton or vegetable sources. Additionally, coating can be and usually is applied onto (base) paper or paper substrate described above for many reasons, such as improvement of performance or aesthetic characteristics. These coating layers generally comprise pigment and binder in order to reach desired high end quality of papers and printing papers in particular. Methods to apply a pigmented coating layer on a paper substrate nowadays commonly include but are certainly not limited to double roll size press coater, blade metering coater, rod metering coater or jet fountain coater. Coating layers described above and applied as such can vary in their pigment and binder composition to fulfil specific targets.

As such, it is important for coated (printing) papers to achieve sufficient gloss levels at the surface of the coating. This is partially achieved by choosing suitable pigments and binders. Commonly, elevated gloss levels of coated (printing) papers are achieved by calendering, a pressure smoothening operation between heated rolls. Inevitably, this process crushes voids present in paper and coating, hereby reducing volume of coated paper at constant mass or reduction of specific volume.

One property that contributes to general quality perception end users have of paper is its specific volume. It is generally accepted that specific volume contributes for example to paper stiffness that, in turn, is an important factor in run ability on a printing press. Additionally, specific volume is known to be an important factor in customers perception of paper with respect to haptonomy. Further, under carefully chosen conditions, increased specific volume of paper might also add to improved opacity.

The present invention thus focuses on the provision of high bulk paper with a high specific volume.

### SUMMARY OF THE INVENTION

The objective problem underlying the present invention is therefore to provide a method for producing high bulk paper, i.e. with a high specific volume, as well as a printing sheet obtained using such a method.

The present invention solves the above problem by proposing a method for making a printing sheet comprising at least one step of providing a formulation (e.g. in the form of an emulsion) comprising an aqueous solution, mixture or suspension of at least a binder and comprising further carbon dioxide under conditions that the carbon dioxide is in supercritical or liquid state and coating a paper substrate with said formulation under release of pressure such that the carbon dioxide expands and subsequent removal of water and possibly present additional solvent under formation of a porous solid layer. It is to be noted that also other systems apart from carbon dioxide are possible as long as it is possible to create a liquid or supercritical state under conditions in which the coating formulation is in a state which allows application to a substrate, and which system expands upon release of pressure under formation of a porous layer, i.e. under formation of hollows or bubbles or voids contributing to high porosity or high specific volume. Conceivable is for example also the use of liquid or supercritical Argon, or Helium. Supercritical carbon dioxide can be obtained for example under conditions of above 31°C and above 73bar. The formation of a foam-like initially wet coating is possible if the coating is applied to the paper substrate under quick and concomitant release of pressure. Subsequent drying leads to a highly porous coating with a high specific volume leading to the desired high bulk paper. It is to be noted that the carbon dioxide is preferably introduced into the formulation under conditions that it is in supercritical state in the formulation prior to the release of pressure. This is possible if the carbon dioxide is introduced into the formulation in liquid or, preferably, in its supercritical state. The formulation as such with the carbon dioxide may also be in a supercritical state.

The object of the present invention is therefore a method according to claim 1, and a printing sheet according to claim 24.

Improvement of specific volume is explained as increase of volume at constant mass or maintaining volume at mass reduction. As such, one can identify several possibilities to increase specific coating volume, being volumetric raw materials like for example light weight pigments. Continuation along this line of thoughts ends at elimination of coating mass whilst maintaining volume. Hence, introduction of gas into coating formulation to create hollow spaces is our goal to create a maximum gain in specific volume.

Several methods to introduce gas into a matrix of binder and pigment are recognized. Mechanical mixing of air/gas into aqueous solution being the most obvious method, but simultaneously it is acknowledged that tremendous energy is required to produce ever smaller stable bubbles. Alternatively, chemical or physical dissolving of air/gas to produce bubbles, has readily found its use in everyday life, for example in soda drinks or hair foams. Both examples implicitly assume a pressurized system, where air/gas is released upon its dedicated expansion. The key is therefore to create air/gas bubbles in a paper coating formulation via an expansion step, before or while coating is applied onto base paper.

In systems, such as the presently intended paper coating formulations, thorough mixing is an obliged condition in order to create desired stable small bubble sizes. As previously described, dispersing of air/gas in aqueous solutions is undesirable due to high mixing energy required. It is far much easier to properly mix two suitable liquids into a fine e.g. emulsified fluid. Thermodynamic stability of solvent micelles in a continuous phase results from its chemical behaviour and final equilibrium distribution of the solvents. Additionally, emulsification and stabilization of the final system can e.g. be enhanced via supporting surface active agents. Precondition of such pressurized emulsions is that one volatile solvent can be easily vaporized, whereas majority of fluid remains in its liquid state under given expansion conditions so that an airy structure can be built.

Considering general process conditions in common paper making and additionally current safety and health issues combined with reduced environmental aggravation, it is one object of the present invention to utilize non-toxic raw materials with preferably no emission of volatile organic compounds (VOC) in an (environmentally) safe process.

The two most abundant solvents known on earth, water and (pressurized) carbon dioxide, are non flammable, essentially non toxic and environmentally benign.

Surprisingly now it has been found that all these conditions can be fulfilled by using carbon dioxide in its supercritical or liquid state for the provision of such a formulation, such formulation preferably being in the form of an emulsion.

To achieve this, typically prior to the release of pressure the formulation is kept at a temperature above 31°C and a pressure above 70 bar, wherein the carbon dioxide is normally in supercritical state. More specifically, it can be shown to be advantageous if prior to the release of pressure the formulation is kept at a temperature above or in the range of 40°C and at a pressure above or in the range of 90 bar, such that the carbon dioxide is in supercritical state.

In order to achieve the formation of an emulsion of carbon dioxide in supercritical state in the water phase comprising the structural constituents, it proves to be helpful if the formulation in addition comprises at least one additive for stabilization of the emulsion. This can be achieved if this additive stabilizes the emulsion in that it supports or initiates or even contributes to the formation of micelles enclosing the supercritical dioxide. Such systems are for example given by low molecular weight surfactants or polymeric low molecular weight surfactants. Possible systems are for example fatty alcohol sulfates or phosphates. Preferred are fatty alcohol sulfates with a C6-C20 linear or branched alkyl chain, preferably with a C10-C16 linear alkyl chain. Particularly preferred is sodium dodecyl sulfate (SDS).

Alternatively or in addition the additive for stabilisation can be chosen to be a polymer with low cohesive energy, e.g. selected from the group consisting of (tri)siloxanes, fluoroalkanes, fluoroethers.

According to a preferred embodiment of the method the additive is present in 1 - 30 weight% of the formulation or emulsion, preferably in 2-15 weight%. As a matter of fact, it can be shown that the more surfactant is present in the formulation or emulsion the smaller bubbles result in the final dry coating.

Typically, the binder is present in 2-30 weight% of the formulation or emulsion, preferably in 5 - 15 weight%. Such a binder can be selected from the group consisting of latex, starch, carboxymethylcellulose (CMC), styrene-butadiene latex, acrylic binder or polyvinyl alcohol (PVA), or a mixture thereof. Particularly useful is the use of partially or fully hydrolyzed polyvinyl alcohol (PVA) as a binder. Generally, the binder should preferably be chosen to have a viscosity in the range of 2 - 50 mPa s, preferably 4-30 mPa s. The viscosity can for example be adjusted by adjusting the molecular weight of the binder, and typically one can show that the higher the viscosity of the binder the more closed the resulting cell structure.

According to another preferred embodiment the formulation or emulsion additionally comprises at least one pigment, preferably present in 2 - 60 weight%, even more preferably present in 5 - 15 weight%. The presence of a white pigment makes sure that the coating is a white coating, which, if is the top coating, in many cases proves to be useful. Also coloured pigments can be used. The pigment may for example be selected from calcium carbonate, clay, silicates, vacuolated and solid polymer pigments and mixtures thereof.

According to a further preferred embodiment of the method according to the invention, the coating is applied such that the dried coating layer has a thickness in the range of 2-30 µm, preferably of 10-20 µm. Typically, the paper substrate is a woodfree or wood containing paper substrate, which may be coated or not. In other words, the paper substrate may already comprise for example a sizing layer prior to the application of the coating according to the invention.

Since expansion of the formulation or emulsion should not happen too early as this may lead to an instable coating, and should not happen too late as this may result in a consolidated coating due to the collapse of the initially present bubbles or hollows or voids, it proves to be advantageous to use a spray coater for the application of the coating. Further a spray coater proves to be particularly useful with respect to system conditions like for example high pressure, necessary for usage of supercritical carbon dioxide.

Removal of water (and possibly present additional solvent, it however being preferred that there is water only as solvent) is preferentially effected using heat drying and/or infrared drying.

The coating according to this method may either be the final top coating, if need be after a calendering step, it may however also be used as an intermediate coating located between the paper substrate and another coating, for example a top coating. This top coating may for example have specific properties like gloss, porosity, roughness, wet repellence, and the like, and may therefore be used for adjustment of the final surface quality of the final printing sheet, while the coating according to the invention substantially only takes over the function of providing a high bulk volume. However, the coating according to the invention may also contribute to the ink setting properties if an additional topcoat is present, as the coating according to the invention also has an inherent porosity. Typically, the porous layer is applied on both sides of the paper substrate, in cases however, where this porous layer is covered by an additional top coating anyway and basically only serves to contribute to a high specific volume, it may also have advantages to provide a porous layer only on one side of the paper substrate and to have top coatings on both sides.

According to a further preferred embodiment, the emulsion is produced by providing a binder and a surfactant and possibly further additives, slurrying this mixture in water, introducing pigment in the proper amount, putting this mixture under pressure suitable to bring carbon dioxide in supercritical state, adding supercritical carbon dioxide to the pressurised dispersion, and finally stirring the mixture such that micelle formation takes place preferably under equilibrium conditions. It is equally possible to produce an emulsion by providing a binder, pigment and a surfactant and possibly further additives, slurrying this mixture in water and subsequently putting this mixture under pressure suitable for the introduction of carbon dioxide in supercritical state.

The present invention in addition to that relates to a printing sheet obtainable or obtained by any of the methods as outlined above. Using this method, a printing sheet can be produced which has a specific volume of more than 0.8 cm³/g, preferably of more than 0.85 cm³/g in the case of a final glossy paper, and which has a specific volume of more than 1.1 cm³/g, preferably of more than 1.2 cm³/g in the case of a final matte paper. Using the present's technique allowed to produce paper with increased bulk by roughly 25%. Typically such a printing sheet has a total weight in the range of 80 to 400 g/m², preferentially of 100 to 250 g/m².

Further preferred embodiments of the method according to the present invention and of the printing sheet according to the invention are outlined in the depending claims.

### SHORT DESCRIPTION OF THE FIGURES

In the accompanying drawings preferred embodiments of the invention are shown in which:
- Figure 1: a) is a cut through a printing sheet with a coating according to the present invention applied on both sides, and b) is a cut through a printing sheet with a coating according to the present invention which is overcoated by an additional topcoat;
- Figure 2: shows in a schematic matter how the emulsion (a) transfers into the final porous coating (b);
- Figure 3: shows a possible set up for the provision of the supercritical emulsion for application as a coating; and
- Figure 4: shows SEM pictures of coatings obtained using the method according to the invention.

### DETAILED DESCRIPTION OF THE PREFERRED EMBODIMENTS

It is possible to produce porous materials from CO₂-in-water (C/W) systems. C/W systems found various applications in nowadays industry, including dry cleaning, enzymatic catalysis and nano-particle synthesis. Especially in the biomedical field, C/W systems have been proven useful to produce material with an (extremely high) internal structure. Such structures are often desired, but techniques utilizing organic solvents may leave residues and this puts certain heavy restraints on the production process. So far, in the paper industry building of porous structures in common paper coating layers has not been proposed, although it offers substantial benefits with respect to specific volume, as described above.

It is the object of this disclosure to produce a highly porous material, this in a safe process without environmental aggravation in any form. The raw materials used are preferably those commonly known to the paper industry, such as binder and pigment. Binder can originate from a natural source (e.g. starch, CMC), or is typically produced with intention of binding (e.g. latexes of styrene-butadiene or acrylic type, or polyvinyl alcohol). As such, pigments intended are typically calcium carbonate or clay, but are certainly not restricted to these, as e.g. silicates might as well be used.

Essential raw material, in particular new to paper coating formulations, is a specific micelle building surfactant intended to build C/W emulsions, as a typical example sodium dodecylsulfate (SDS) is mentioned here. Formation of (micro- and macro) emulsions is stabilized by polymeric low molecular weight surfactants that can handle CO₂. Special surfactants are necessary because CO₂ lacks a permanent dipole moment and has weak van der Waals forces, as reflected in its low polarizability per unit volume. Consequently, steric tail-tail interactions between approaching droplets often do not provide enough repulsion to counteract attractive core-core forces. As a result, flocculation and coalescence readily occur. To accommodate CO₂'s relatively weak van der Waals forces, emulsions can be stabilized by low molecular weight surfactants or polymers with low cohesive energies, such as (tri)siloxanes, fluoroalkanes or fluorethers.

Additionally, some thoughts concerning coating application under pressure release must be made. As basic consideration, coating must remain under pressure until it is applied directly onto paper. Too early expansion may well lead to an instable coating as a result of readily present gas bubbles. Too late expansion (e.g. if combined with too early drying) can result in a consolidated coating that does not fully benefit from the porosity forming potential of s-CO₂. As such, a spray coating process is considered to be ideal, but certainly not the only process, to apply described coating onto paper.

Spray coating is a non-contact coating process where the coating is applied via a nozzle directly onto the (moving) substrate under high pressures. As such, the coating mixture can remain under supercritical conditions up to the moment of spraying, which is thought necessary considering the high process speeds in paper industry nowadays.

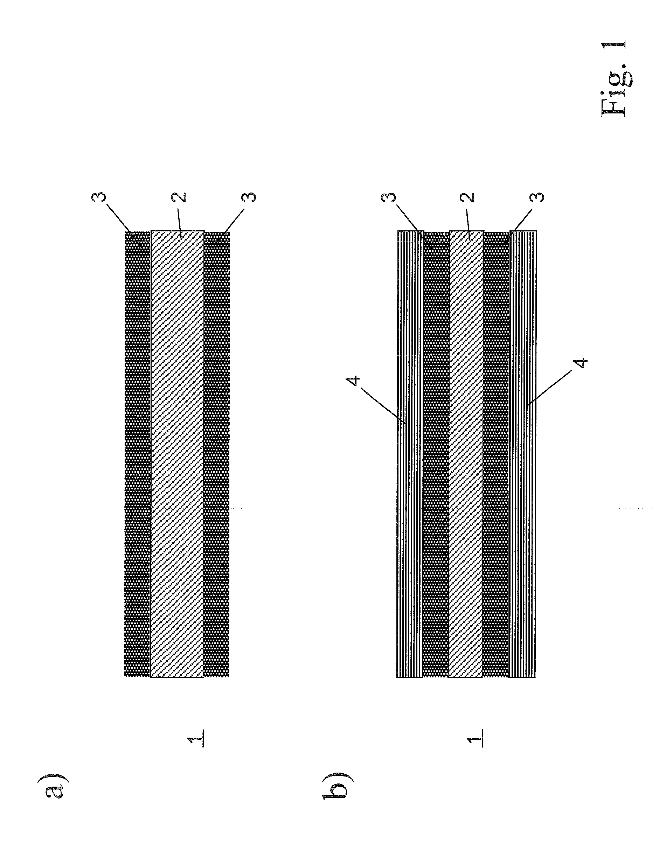

Possible structures of a final printing sheet 1 are given in figure 1. The coating 3 along the lines of this invention can be present on both sides of a paper substrate 2 as indicated in figure 1a). It may however also be located as an intermediate layer, so it may be overcoated by an additional topcoat 4, as schematically indicated in figure 1b). It is to be noted that the thicknesses of the layers are not to be scaled. Typically, the paper substrate 2 has a thickness in the range of 50 - 170 µm, preferably 80-160 µm. The porous layer 3 typically has a thickness in the range of 2-30 µm, preferably of 10-20 µm, and the optional top layer 4 may have a thickness in the range of 2-15µm, preferably of 8-12 µm.

### Description of supercritical foaming process steps:

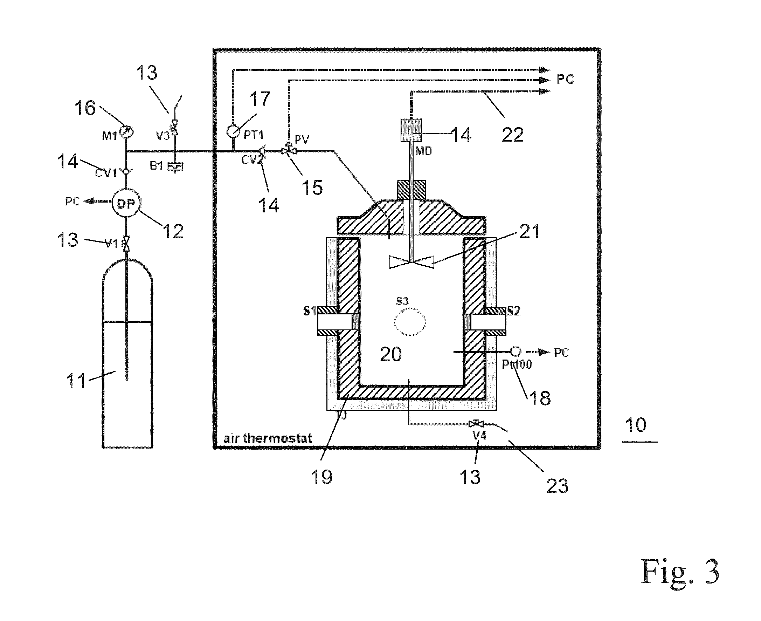

General process steps for creating a highly porous paper coating layer 3 are then as follows:
In an initial step, binder (e.g. PVA) and a suitable surfactant (e.g. SDS) are slurried under suitable conditions in water. Eventually, pigment (e.g. CaCO₃ and/or clay and/or other pigments) may be added for specific reasons (e.g. price, opacity) not further explained here. Next, this structure building mixture is brought in a pressure chamber 20 (see Figure 3 discussed below) that suits supercritical conditions of CO₂ (T>31 °C, p>70 bar). After adding supercritical CO₂ (s-CO₂) 11 to the pressurized dispersion, micelle formation takes place under thorough stirring. After sufficient agitation time (typically in the range of 1-15 minutes but depending on mixing speed and applied shear forces), pressure is released from the C/W dispersion, which leads to expansion of CO₂-micelles. After full expansion, CO₂ is present as " expanded gas-filled micelle". Since the aqueous phase is still present as matrix fluid, a wet foam now exists that needs to be dried in a regular way (i.e. infrared, air drying) to remove the remaining water phase, which, in turn, leads to a dried foam or highly porous structure.

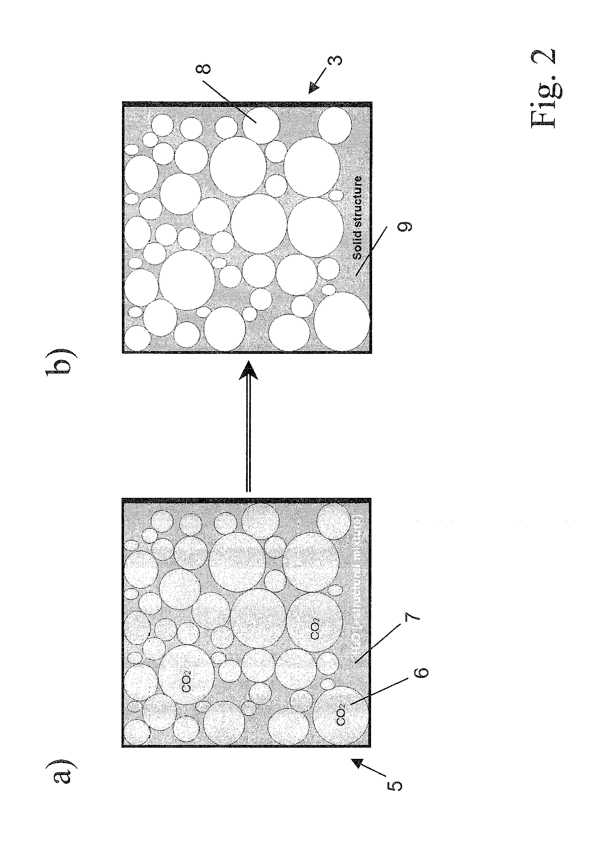

These steps are schematically given in Figure 2. The initial emulsion 5 is a system comprising micelles 6 which are filled by supercritical carbon dioxide. These micelles 6 are located within a water comprising structural mixture 7, i.e. a mixture comprising binder and water at least, in specific cases in addition to that a pigment.

In the transition from figure 2a) to figure 2b) according to the indicated arrow, i.e. under initial expansion (venting carbon dioxide) upon application using the spray coater and subsequent evaporation (removal of water in a drying process), finally a porous layer 3 is generated, which consists of a solid structure or matrix 9 in which there is a plurality of hollows or voids 8.

The process described above should ideally take place under common coating conditions for paper industry, at least on a moving paper web. Ideally, the porous layer 3 is applied as single coating with suitable (offset) printing properties, preferably on both sides of the paper web. However, printing is certainly not limited to offset processes, such as sheet fed offset, or heat set web offset, but could be extended to modern techniques such as ink jet or digital (laser) processes.

Additionally, such porous coating layers can very well be applied as deeper coating on which eventually a functional top coating 4 is applied to provide the end paper with its final properties, e.g. with respect to (offset) printing or certain optical quality. Further processing might also be necessary to obtain certain required properties. As such, calendering is mentioned here as obvious example that will not be further explained.

Application of the coating was carried out with a set up as described in figure 3. In this figure, a high-pressure apparatus 10 is shown which comprises the main vessel 20. Liquid carbon dioxide 11 is provided from a separate source, this via a dosing pump 12 and corresponding high-pressure valves 13, a check valve 14, an air operated valve 15. Conditions can be monitored by a manometer 16 and a pressure transducer 17. In order to maintain the proper pressure and temperature conditions, within vessel 20, there is provided at least one thermometer 18, means for a thermostatting 19, and in order to initiate, and assist and facilitate the formation of micelles, a mixing device 21 is provided driven by a motor 24. The whole device is controlled via lines 22 and a corresponding control unit. An outlet 23 is provided to a spray coater of a paper machine or to a coating unit.

The following experiments were carried out where an aqueous solution of different PVA types was thoroughly mixed with surfactant, and additionally pigment was added. After adding s-CO₂ to this mixture and sufficient agitation time for equilibrium was taken into account, expansion took place by opening exit valve of pressure chamber analogous to a spray coater onto a substrate, after which the product was brought in its final state by drying for at least 30 minutes at 120 °C in a hot air oven.

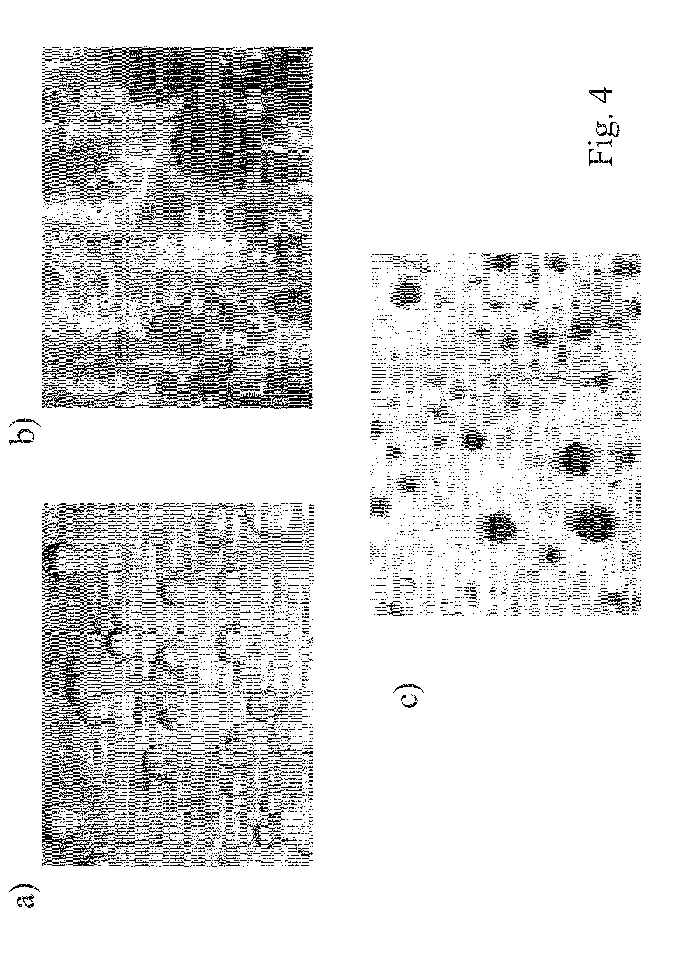

After drying a white porous polymeric structure (foam) is observed in all experiments. Visual observation showed that more surfactant leads to smaller bubbles. This was verified SEM recordings. Examples and corresponding photographs are given below and in Figure 4.

Although not explicitly mentioned in examples below, addition of co-surfactant, use of other pigments and/or surfactants and/or binder or changes in their concentrations or alternate composition of above mentioned formulations is allowed.

### EXAMPLE 1:

PVA Mowiol type 26-88 (10 % m/m) combined with surfactant SDS (12 % m/m). See Figure 4 a).

### EXAMPLE 2:

PVA Mowiol type 3-83 (10 % m/m) combined with surfactant SDS (12 % m/m). See Figure 4b).

### EXAMPLE 3:

PVA Mowiol type 26-88 (5 % m/m) combined with surfactant SDS (2 % m/m) and fine CaCO₃ (9 % m/m). See Figure 4c).

Apart from the above-mentioned surfactant SDS also AOT (Dioctyl sulfosuccinate, sodium salt) as well as LS-54 (Alcohol ethoxylate propoxylate, as e.g. available from Brøste A/S) were used, leading also to foam like solid structures.

As can be seen from the examples, the technique described in this disclosure has the potential to form closed cell as well as open cell structures. As described in example 1 and example 2, one way to achieve this is to change molecular weight and herewith viscosity of PVA. In this particular example, change to higher molecular weight results in a more closed cell structure. Other ways to achieve a similar effect are possible. Additionally, it is proven that stable foam structures containing fine CaCO₃ as pigment filler can be produced (seen example 3). Other pigments might be used to obtain similar effect.

### LIST OF REFERENCE NUMERALS

- 1: printing sheet
- 2: paper substrate
- 3: porous layer
- 4: topcoat
- 5: formulation, supercritical emulsion
- 6: micelle filled with supercritical carbon dioxide
- 7: water comprising structural mixture
- 8: hollows, voids
- 9: solid structure
- 10: high-pressure apparatus
- 11: liquid carbon dioxide
- 12: dosing pump
- 13: high-pressure valve
- 14: check valve
- 15: air operated valve
- 16: manometer
- 17: pressure transducer
- 18: thermometer
- 19: thermostatting
- 20: vessel
- 21: mixing device, stirrer
- 22: control lines to computer/control
- 23: outlet to spray coater of paper machine or coating unit
- 24: motor for 21

## Claims

1. Method for making a printing sheet (1) comprising at least one step of providing an formulation (5) comprising an aqueous solution, mixture or suspension (7) of at least a binder and further comprising carbon dioxide under conditions that the carbon dioxide is in supercritical or liquid state and coating a paper substrate (2) with said formulation (7) under release of pressure such that the carbon dioxide expands and subsequent removal of water and possibly present additional solvent under formation of a porous solid layer (3).

2. Method according to claim 1, wherein prior to the release of pressure the formulation (5) is kept at a temperature above 31°C and a pressure above 70 bar.

3. Method according to claim 1, wherein prior to the release of pressure the formulation (5) is kept at a temperature above or in the range of 40°C and at a pressure above or in the range of 90 bar.

4. Method according to any of the preceding claims, wherein the solution, mixture or suspension (7) in addition comprises at least one additive for stabilization of the formulation (5).

5. Method according to claim 4, wherein the additive for stabilisation is a low molecular weight surfactant or polymeric low molecular weight surfactant and wherein the formulation is in the form of an emulsion.

6. Method according to claim 5, wherein the low molecular weight surfactant is a fatty alcohol sulphate or phosphate, preferably a fatty alcohol sulphate with a C6-C20 linear or branched alkyl chain, preferably a C10-C16 linear alkyl chain.

7. Method according to claim 6, wherein the low molecular weight surfactant is sodium dodecyl sulfate (SDS), Dioctyl sulfosuccinate or an alcohol ethoxylate propoxylate.

8. Method according to any of claims 4-7, wherein the additive for stabilisation is a polymer with low cohesive energy, preferably selected from the group consisting of (tri)siloxanes, fluoroalkanes, fluoroethers.

9. Method according to any of claims 4-8, wherein the additive is present in 1 - 30 weight% of the emulsion (5), preferably in 2-15 weight%.

10. Method according to any of the preceding claims, wherein the binder is present in 2-30 weight% of the emulsion (5), preferably in 5 - 15 weight%.

11. Method according to any of the preceding claims, wherein the binder is selected from the group consisting of latexes, starch, carboxymethylcellulose (CMC), styrene-butadiene, acrylic binder or polyvinyl alcohol (PVA), or a mixture thereof.

12. Method according to claim 11, wherein the binder comprises partially or fully hydrolyzed polyvinyl alcohol (PVA) with a viscosity in the range of 2 - 50 mPa s, preferably 4 - 30 mPa s.

13. Method according to any of the preceding claims, wherein the formulation (5) additionally comprises at least one pigment, preferably present in 2 - 60 weight%, even more preferably present in 5 - 15 weight%.

14. Method according to claim 13, wherein the pigment is selected from calcium carbonate, clay, silicates, vacuolated and/or solid polymer pigments and mixtures thereof.

15. Method according to any of the preceding claims, wherein the coating is applied such that the dried coating layer (3) has a thickness in the range of 2-30 µm, preferably of 10 - 20 µm.

16. Method according to any of the preceding claims, wherein the paper substrate (2) is a woodfree or wood containing paper substrate, which may be coated or not.

17. Method according to any of the preceding claims, wherein the coating is applied using a spray coater, a jet coater or a blade coater, preferably by using a spray coater.

18. Method according to any of the preceding claims, wherein removal of water and possibly present additional solvent is effected using heated drying and/or infrared drying.

19. Method according to any preceding claim, wherein the porous solid layer (3) is subsequently covered by an additional layer (4).

20. Method according to any preceding claim, wherein a porous layer (3) is applied on both sides of the paper substrate (2).

21. Method according to any preceding claim, wherein the formulation (5) is produced by providing a binder and a surfactant and possibly a further additives, slurrying this mixture in water, introducing, if needed, pigment prior or after slurrying, putting this mixture under pressure suitable to bring carbon dioxide in supercritical or liquid state, adding supercritical or liquid carbon dioxide to the pressurised dispersion, stirring the mixture such that micelle formation takes place.

22. Method according to any preceding claim, wherein the carbon dioxide is introduced into the formulation (5) under conditions that it is in supercritical state in the formulation (5) prior to the release of pressure.

23. Method according to any preceding claim, wherein the carbon dioxide is introduced into the formulation (5) in supercritical or liquid state.

24. Printing sheet obtainable or obtained by any of the methods according to the preceding claims.

25. Printing sheet according claim 24, wherein it has a specific volume of more than 0.8 cm³/g, preferably of more than 0.85 cm³/g in case of a final glossy paper, and wherein it has a specific volume of more than 1.1 cm³/g, preferably of more than 1.2 cm³/g in case of a final matte paper.

26. Printing sheet according to any of claims 24 and 25, wherein it has a total weight in the range of 80 to 400 g/m², preferentially of 100 to 250 g/m².
